**Europäisches Patentamt**

**European Patent Office**

**Office européen des brevets**

(11) Veröffentlichungsnummer: **0 321 975**
**A1**

## EUROPÄISCHE PATENTANMELDUNG

(21) Anmeldenummer: 88121490.2

(51) Int. Cl.4: **C04B 35/58**

(22) Anmeldetag: 22.12.88

(30) Priorität: 22.12.87 DE 3743663

(43) Veröffentlichungstag der Anmeldung:
28.06.89 Patentblatt 89/26

(84) Benannte Vertragsstaaten:
AT BE CH DE FR GB IT LI NL SE

(71) Anmelder: Elektroschmelzwerk Kempten GmbH
Herzog-Wilhelm-Strasse 16
D-8000 München 2(DE)

(72) Erfinder: Hunold, Klaus, Dr. Dipl.-Chem.
Hochgratweg 8
D-8961 Lauben(DE)
Erfinder: Kempf, Thomas, Dipl.-Ing.(FH)
Freudental 5 b
D-8960 Kempten(DE)
Erfinder: Lipp, Alfred, Dr. Dipl.-Chem
Bürgermeister-Singer-Strasse 15
D-8939 Bad Wörishofen(DE)

(54) Polykristalline Sinterkörper auf Basis von Aluminiumnitrid und Verfahren zu ihrer Herstellung.

(57) Gegenstand der Erfindung sind polykristalline Sinterkörper auf Basis von Aluminiumnitrid mit einer Dichte von mindestens 95 % der theoretisch möglichen Dichte, die aus mindestens 90 Gew.-% einer kristallinen Hauptphase aus AlN und mindestens einer kristallinen Korngrenzenphase bestehen. Die Korngrenzenphasen bestehen ausschließlich aus mindestens einer kristallinen Aluminatphase, in welcher das Aluminat aus den dreiwertigen Kationen von Lanthan und den Lanthaniden gebildet ist. Mindestens eine dieser kristallinen Aluminatphasen enthält zusätzlich im wesentlichen den gesamten Sauerstoff aus dem Aluminiumnitrid-Ausgangsmaterial gebunden.

Die polykristallinen Sinterkörper auf Basis von Aluminiumnitrid können durch drucklose Sinterung von Pulvergemischen aus AlN und Sinteradditiven bei Temperaturen bis zu 1900 °C und gegebenenfalls anschließender heißisostatischer Nachverdichtung hergestellt werden, wobei als Sinteradditive kristalline Aluminatpulver aus Verbindungen der allgemeinen Formel

$$mMe_2O_3 \times nAl_2O_3$$

worin Me = La oder Lanthaniden, m = 2 oder 1 und n = 1, verwendet werden, die vor dem Vermischen mit den übrigen Bestandteilen und vor der Sinterung aus Lanthanoxid oder einem Oxid der Lanthaniden mit Aluminiumoxid im Molverhältnis 2:1 bis 1:1 durch Erhitzen auf Temperaturen von 1700 ° bis 1900 °C hergestellt worden sind.

**Polykristalline Sinterkörper auf Basis von Aluminiumnitrid und Verfahren zu ihrer Herstellung**

Polykristalline Sinterkörper auf Basis von Aluminiumnitrid sind bekannt. Sie zeichnen sich durch eine Kombination wertvoller Eigenschaften aus, wie hohe Festigkeit, Thermoschockbeständigkeit, hohe Wärmeleitfähigkeit, niedrige elektrische Leitfähigkeit und Korrosionsbeständigkeit gegenüber flüssigen Metallen. Aufgrund dieser Eigenschaftskombination können sie auf sehr vielen Anwendungsgebieten eingesetzt werden, wobei die Verwendung als korrosionsbeständige Werkstoffe in der Metallurgie und als Substratwerkstoffe in der Hochleistungselektronik zunehmend an Bedeutung gewinnt.

Die bisher bekannten polykristallinen Sinterkörper auf Basis von Aluminiumnitrid haben jedoch teilweise erheblich schlechtere Eigenschaften als reines Aluminiumnitrid, da dessen Eigenschaften in hohem Maße von vorhandenen Verunreinigungen abhängig sind, worunter insbesondere Verunreinigungen durch Sauerstoff und Metalle zu verstehen sind, die entweder in gebundener Form als Korngrenzenphasen oder in gelöster Form im Aluminiumnitridgitter vorhanden sind.

Bekannt ist aber auch, daß reines Aluminiumnitrid aufgrund seiner überwiegend kovalenten Bindung nur sehr schlecht sinterfähig ist. Zur Erzielung hoher Sinterdichten, insbesondere bei den sogenannten Drucklos-Sinterverfahren, ist daher die Mitverwendung von Sinterhilfsmitteln unbedingt erforderlich. Zahlreiche Verbindungen wurden hinsichtlich ihrer sinterfordernden Wirkung für Aluminiumnitrid untersucht, wobei sich solche auf Oxidbasis von Elementen aus den Gruppen 2a und 3b des Periodischen Systems einschließlich der Lanthaniden besonders bewährt haben (vgl. K Komeya et al. in Yogyo Kyokaishi, 1981, Vol. 89 (6), S. 330-336; ref. in C.A. Vol. 95 (1981), No. 155 257 z). Wegen der bekannten Empfindlichkeit des Aluminiumnitrids gegenüber Verunreinigungen, insbesondere Sauerstoff-Verunreinigungen, mußte versucht werden, wenig Sinterhilfsmittel zu verwenden, um den durch die Sinterhilfsmittel selbst eingebrachten Sauerstoff gering zu halten und den im Aluminiumnitridpulver vorhandenen Sauerstoff an die Sinterhilfsmittel zu binden.

Nach dem aus der EP-A-147 101 bekannten Verfahren soll das dadurch erreicht werden, daß Aluminiumnitridpulver, die 0,001 bis 7 Gew.-% Sauerstoff enthalten, zusammen mit 0,01 bis 15 Gew.-% Oxiden von Seltenen Erdmetallen beispielsweise drucklos gesintert werden. Dabei soll der im Aluminiumnitridausgangspulver vorhandene Sauerstoff mit den Oxiden der Seltenen Erdmetalle (vorzugsweise $Y_2O_3$) reagieren unter Bildung von Verbindungen (Phasen) mit Granatstruktur oder mit Perowskitstruktur, damit kein überschüssiger Sauerstoff in das Aluminiumnitridgitter unter Bildung einer festen Lösung eindiffundieren oder Aluminiumoxinitridphasen (AlN-Polytypen) bilden kann. Diese Granat- oder Perowskit- Phasen werden während des Sintervorgangs bei relativ niedrigen Temperaturen (1000° bis 1300° C) gebildet, sie schmelzen bei höheren Temperaturen (1600° bis 1950° C) und bewirken eine sogenannte Flüssigphasen-Sinterung, die zu hochverdichteten Körpern führt. Wie aus den Beispielen ersichtlich, wurden die besten Ergebnisse hinsichtich der Wärmeleitfähigkeit mit Aluminiumnitridkörpern erreicht, die aus Aluminiumnitridpulvern mit Sauerstoffgehalten von 0,3 bis 1,0 Gewichtsprozent unter Zusatz von 0,1 bis 3,0 Gew.-% $Y_2O_3$ durch druckloses Sintern bei 1800° C hergestellt worden waren. Durch Röntgenbeugungsanalyse wurden in diesen Körpern neben der Hauptphase Aluminiumnitrid, geringe Mengen der Al-Y-Granatphase und Aluminiumoxinitridphase nachgewiesen. Das bedeutet, daß die Umwandlung des ursprünglich eingesetzten Oxids in die Granatphase unter Bindung des Sauerstoffs nur unvollständig gelungen war.

Nach dem aus der EP-A-180 724 bekannten Verfahren werden Aluminiumnitridpulver zusammen mit Oxiden oder Fluoriden von Seltenen Erdmetallen und Erdalkalimetallen, wobei jeweils mindestens zwei der genannten Verbindungen vorhanden sein müssen, drucklos gesintert. Durch Röntgenbeugungsanalyse wurden in den so hergestellten Sinterkörpern neben der Hauptphase Aluminiumnitrid, Mischphasen aus den Seltenen Erdoxiden mit Aluminiumoxid und den Alkalierdoxiden mit Aluminiumoxid und in einigen Fällen Aluminium-Oxinitridphasen festgestellt.

Nach dem aus der EP-A-207 465 bekannten Verfahren werden Aluminiumnitridpulver zusammen mit Verbindungen von Seltenen Erdmetallen und/oder Erdalkalimetallen und zusätzlich mindestens einem weiteren Additiv bestehend aus einem Übergangsmetall oder einer Verbindung hiervon drucklos gesintert. Die mikroskopische Untersuchung der so hergestellten Sinterkörper zeigte an den Korngrenzen zwischen den Aluminiumnitridteilchen die entsprechenden Mischphasen aus einer Aluminiumverbindung mit Seltenen Erdmetallen und/oder Erdalkalimetallen, die auch in Form der entsprechenden Oxide oder Oxifluoride vorliegen konnten und die zusätzlich das jeweils verwendete Übergangsmetall enthielten.

Schließlich werden nach dem aus der DE-A1-36 27 317 bekannten Verfahren Aluminiumnitridpulver zusammen mit mindestens einer Halogenverbindung von Erdalkalimetallen, Metallen der Lanthangruppe und Yttrium und mindestens einer halogenfreien Verbindung von Erdalkalimetallen, Metallen der Lanthangruppe und Yttrium drucklos gesintert. Als Beispiele für halogenfreie Verbindungen werden unter anderem auch

2

Aluminate der oben erwähnten Metalle genannt. Die Eigenschaften des fertigen Aluminiumnitridsinterkörpers können durch Auswahl der Halogenverbindung und der halogenfreien Verbindungen variiert werden. So soll beispielsweise durch Kombination einer Halogenverbindung mit einem Oxid als halogenfreier Komponente eine hohe Wärmeleitfähigkeit erreicht, während durch Kombination der Halogenverbindung mit einem Aluminat ein leichteres Sintern und bessere mechanische Festigkeit erreicht werden sollen. Wie aus den Beispielen ersichtlich, wurde durch Kombination von Yttriumfluorid mit Calciumaluminat eine hohe Wärmeleitfähigkeit erzielt, die bei Verwendung von Calciumaluminat allein, das heißt, ohne Yttriumfluorid auf die Hälfte des Wertes abfiel, wie durch einen Vergleichsversuch bestätigt.

Wie aus dem umfangreichen Stand der Technik ersichtlich, ist es bisher offensichtlich nicht gelungen, polykristallineAluminiumnitridsinterkörper auf einfache Weise herzustellen, die sowohl eine ausreichend hohe Dichte haben, als auch weitgehend frei von Verunreinigungen durch Sauerstoff und/oder Metalle sind, welche beispielsweise die Wärmeleitfähigkeit durch Veränderung der Gitterparameter in den Aluminiumnitridkristallen und/oder durch Oxid- oder Oxinitridphasen an den Korngrenzen der Aluminiumnitridkristalle störend beeinflussen.

Es stellt sich somit die Aufgabe, polykristalline Sinterkörper auf Basis von Aluminiumnitrid mit ausreichend hoher Dichte und mit guten thermischen und mechanischen Eigenschaften zur Verfügung zu stellen, die beispielsweise sowohl als korrosionsbeständige Werkstoffe in der Metallurgie als auch als Substratwerkstoffe in der Hochleistungselektronik eingesetzt werden können. Außerdem ist ein Verfahren anzugeben, durch das derartige Sinterkörper mit den gewünschten Eigenschaften unter Mitverwendung von halogenfreien Sinterhilfsmitteln in korrosionsfreier Atmosphäre auf geräte- und umweltschonende Weise durch drucklose Sinterung hergestellt werden können.

Diese Aufgabe wird erfindungsgemäß für polykristalline Sinterkörper auf Aluminiumnitridbasis, die eine Dichte von mindestens 95 % der theoretisch möglichen Dichte haben und aus mindestens 90 Gew.-% einer kristallinen Hauptphase aus Aluminiumnitrid und mindestens einer kristallinen Korngrenzenphase aus gebundenen Sauerstoff enthaltenden Aluminiumverbindungen bestehen, dadurch gelöst, daß die Korngrenzenphasen ausschließlich aus mindestens einer kristallinen Aluminatphase bestehen, in welcher die das Aluminat bildenden Elemente einzeln oder im Gemisch aus der Gruppe der dreiwertigen Kationen von Lanthan und den Lanthaniden ausgewählt sind und mindestens eine dieser kristallinen Aluminatphasen zusätzlich im wesentlichen den gesamten Sauerstoff aus dem Aluminiumnitrid-Ausgangsmaterial gebunden enthält.

Die erfindungsgemäßen Sinterkörper auf Aluminiumnitridbasis haben definitionsgemäß eine Dichte von mindestens 95 %, worunter die theoretisch mögliche Dichte des gesamten Sinterkörpers zu verstehen ist, das heißt, bezogen auf das Gesamtgewicht von Aluminiumnitrid und der nach dem Sintervorgang noch vorhandenen Reste der ursprünglich eingesetzten Sinterhilfsmittel und der ursprünglich vorhandenen Verunreinigungen (im folgenden als % TD abgekürzt). Vorzugsweise haben die erfindungsgemäßen Sinterkörper eine Dichte von mindestens 97 % TD und insbesondere von mehr als 99 % TD.

Die erfindungsgemäßen Sinterkörper auf Aluminiumnitridbasis bestehen definitionsgemäß aus mindestens 90 Gew.-% der kristallinen Aluminiumnitrid-Hauptphase, worunter zu verstehen ist, daß mindestens 90 Gew.-% des gesamten Sinterkörpers aus Aluminiumnitrid bestehen, um sicher zu stellen, daß die Eigenschaften von Aluminiumnitrid nicht durch größere Anteile an keramischen Fremdstoffen, die von den ursprünglich eingesetzten Sinterhilfsmitteln und von ursprünglich vorhandenen Verunreinigungen stammen, beeinträchtigt oder verändert werden.

Vorzugsweise bestehen die erfindungsgemäßen Sinterkörper aus mindestens 95 Gew.-% und insbesondere aus mehr als 97 Gew.-% aus Aluminiumnitrid.

Das entscheidende Merkmal für die erfindungsgemäßen Aluminiumnitridsinterkörper ist, daß die Korngrenzenphasen definitionsgemäß ausschließlich aus mindestens einer kristallinen Aluminatphase bestehen, in welcher das Aluminat aus den dreiwertigen Kationen von Lanthan und den Lanthaniden gebildet ist.

Unter "ausschließlich" ist zu verstehen, daß in den erfindungsgemäßen Aluminiumnitridsinterkörpern neben der oder den Aluminatphasen keine anderen Phasen nachweisbar sind, das heißt, daß im Röntgenbeugungsspektrum keine Peaks für Oxide oder für Oxinitride vorhanden sind. Die Aluminatphasen selbst können dabei aus Mischkristallen oder aus Verbindungen von stochiometrischer Zusammensetzung bestehen.

Die das Aluminat bildenden Elemente in den Aluminatphasen, worunter definitionsgemäß Lanthan und die Lanthaniden in Form ihrer dreiwertigen Kationen zu verstehen sind, können gleich oder verschieden sein, da diese aufgrund ihrer ähnlichen Kationenradien isomorph vertretbar sind.

Wenn in den erfindungsgemäßen Aluminiumnitridsinterkörpern nur eine kristalline Aluminatphase vorhanden ist, besteht diese definitionsgemäß aus einer Aluminatphase, welche zusätzlich im wesentlichen den gesamten Sauerstoff aus dem Aluminiumnitrid-Ausgangsmaterial gebunden enthält und vorteilhaft durch die

allgemeine Formel

$$mMe_2O_3 \times nAl_2O_3$$

ausgedrückt werden kann, in der Me = La oder Lanthaniden, m = mindestens 1 und n = m oder eine Zahl von > m.

Beispiele hierfür sind unter den Verbindungen mit stochiometrischer Zusammensetzung solche, worin m und n = 1 ($Me_2O_3 \times Al_2O_3$), solche, worin m = 3 und n = 5 ($3Me_2O_3 \times 5Al_2O_3$) und solche, worin m = 1 und n = 11 ($Me_2O_3 \times 11Al_2O_3$). Außer den aluminiumoxidreicheren, kristallinen Aluminatphasen können in den erfindungsgemäßen Aluminiumnitridsinterkörpern noch andere kristalline Aluminatphasen vorhanden sein, in welchen gemäß der oben angegebenen allgemeinen Formel Me die angegebene Bedeutung hat, m = mindestens 1 und n = eine Zahl von < m.

Beispiele hierfür sind unter den Verbindungen mit stöchiometrischer Zusammensetzung solche, worin m = 2 und n = 1 ($2Me_2O_3 \times Al_2O_3$).

Die erfindungsgemäßen polykristallinen Sinterkörper auf Aluminiumnitridbasis können in an sich bekannter Weise durch drucklose Sinterung von Pulvergemischen aus Aluminiumnitrid und Sinteradditiven auf Oxidbasis bei Temperaturen bis zu 1900 °C hergestellt werden, mit der entscheidenden Maßgabe, daß als Sinteradditive kristalline Aluminatpulver aus Verbindungen der allgemeinen Formel

$$mMe_2O_3 \times nAl_2O_3$$

worin Me = La oder Lanthanide, m = 2 oder 1 und n = 1 verwendet werden, die vor dem Vermischen mit den übrigen Bestandteilen und vor der Sinterung aus Lanthanoxid oder einem Oxid der Lanthaniden mit Aluminiumoxid im Molverhältnis 2:1 bis 1:1 durch Erhitzen auf Temperaturen von 1700° bis 1900°C hergestellt worden sind.

Durch die Verwendung von bereits fertigen Aluminatpulvern als Sinteradditive bei der Herstellung der erfindungsgemäßen Aluminiumnitridsinterkörper wird sichergestellt, daß von der Herstellung her im Aluminiumnitridausgangspulver vorhandener Sauerstoff, der als Hauptverunreinigung größtenteils in Form von $Al_2O_3$ vorliegt, durch Reaktion mit dem Aluminat abgefangen wird unter Bildung einer $Al_2O_3$-reicheren Aluminatphase und daher nicht mehr für den Einbau in das Aluminiumnitridgitter unter Bildung einer festen Lösung zur Verfügung steht. Bei Überdosierung des Aluminatsinterhilfsmittels kann dieses als zusätzliche Aluminatphase mit einem geringeren $Al_2O_3$-Gehalt, entsprechend der Zusammensetzung des ursprünglichen Aluminatpulvers an den Korngrenzen vorliegen.

Im Gegensatz hierzu wurde bei den bisher bekannten Verfahren dieses "Abfangen" des Sauerstoffs durch Reaktion mit Oxiden oder oxidbildenden Verbindungen vorgenommen, aus welchen die Aluminate erst während des Sintervorgangs gebildet wurden, was aufgrund der Gleichgewichtseinstellung unter den gegebenen Bedingungen des drucklosen Sinterns zwangsläufig nicht vollständig war. Vorhandener Sauerstoff wurde daher entweder nicht vollständig gebunden oder bei Überdosierung der oxidischen Sinterhilfsmittel konnten diese zusätzlich als Oxidphasen an den Korngrenzen vorliegen.

Der Einsatz der bereits fertigen Aluminatpulver als Sinterhilfsmittel bietet darüberhinaus den Vorteil, daß die drucklose Sinterung der Aluminiumnitridpulvergemische bei niedrigerer Temperatur als bisher vorgenommen werden kann, weil die Schmelzphase von Lanthan- oder Lanthaniden- Aluminaten mit zunehmender Aufnahme von $Al_2O_3$ in Richtung niedrigerer Temperaturen verschoben wird.

Für die Herstellung der erfindungsgemäßen polykristallinen Aluminiumnitridsinterkörper werden als Ausgangsmaterial vorteilhaft Aluminiumnitridausgangspulver mit einer mittleren Teilchengröße von < 2 $\mu$ m, vorzugsweise < 0,8 $\mu$ m und mit einer Reinheit von mindestens 99,5 %, bezogen auf metallische Verunreinigungen + C ausgewählt. Unter metallischen Verunreinigungen sind alle metallischen Elemente (im wesentlichen Fe, Si, Ca und Mg) zu verstehen mit Ausnahme des in gebundener Form vorliegenden Aluminiums, die ebenfalls wie der Kohlenstoff ausschließlich von der Herstellung her in handelsüblichen AIN-Pulvern vorhanden sein können.

Diese metallischen Verunreinigungen + C können bis zu höchstens 0,5 Gew.-% im Aluminiumnitridpulver toleriert werden.

Der aufgrund der bekannten Hydrolyseneigung feinteiliger Aluminiumnitridpulver als Hauptverunreinigung vorliegende Sauerstoff kann bis zu höchstens 2 Gew.-% toleriert werden.

Die als Sinteradditive verwendeten kristallinen Aluminatpulver von La oder den Lanthaniden, die wie angegeben hergestellt worden sind, haben vorteilhaft eine Teilchengröße von < 1 $\mu$ m, vorzugsweise < 0,5 $\mu$ m und eine Reinheit von mindestens 99,0 %. Als Verunreinigungen sind ebenfalls metallische Verunreinigungen der genannten Art + C, die von der Herstellung der Oxide her vorhanden sein können, bis zu höchstens 1 Gew.-% tolerierbar.

Für die Festlegung der Menge der als Sinterhilfsmittel verwendeten Aluminatpulver im Ausgangsgemisch ist der im Aluminiumnitridausgangspulver vorhandene Sauerstoff zu berücksichtigen. Gute Ergebnisse können erzielt werden, wenn insgesamt etwa gleich viel oder etwas mehr Aluminatpulver verwendet wird, als stöchiometrisch für das Abfangen des Sauerstoffs unter Bildung einer aluminiumoxidreicheren Phase in den fertigen Aluminiumnitridsinterkörpern erforderlich sind.

Der so errechnete Wert für die Menge des Aluminatpulvers ist jedoch ein Näherungswert, da der Sauerstoff im Aluminiumnitridpulver in der Regel nicht vollständig als $Al_2O_3$ vorliegt, sondern teilweise auch als $Al(OH)_3$, als physikalisch oder chemisch absorbiertes Wasser oder als im AlN-Gitter gelöster Sauerstoff.

Die Menge des Aluminatpulverzusatzes wird daher vorteilhaft so bemessen, daß sie nicht nur für die Erniedrigung des Sauerstoffgehalts im Aluminiumnitridsinterkörper sondern gleichzeitig auch für die Bildung einer Schmelzphase ausreicht, welche die Sinterung unter möglichst hoher Verdichtung des Aluminiumnitrids bei möglichst niedriger Temperatur erlaubt. Zusätze der Aluminatpulver in Mengen von 0,01 bis 5,00 Gew.-%, vorzugsweise von 0,05 bis 2,00 Gew.-%, jeweils bezogen auf das Gesamtgewicht der Ausgangspulvergemische aus AlN + Sinterhilfsmittel, haben sich hierfür bewährt.

Die Durchführung des Verfahrens zur Herstellung der erfindungsgemäßen polykristallinen Aluminiumnitridsinterkörper wird wie folgt erläutert:

Zunächst wird das Aluminiumnitridpulver mit dem Aluminatpulverzusatz homogen vermischt, was vorteilhaft dadurch erreicht wird, daß das Aluminiumnitridpulver gemeinsam mit dem Aluminatpulver in einem wasserfreien organischen Lösungsmittel dispergiert wird. Als organische Lösungsmittel können beispielsweise Aceton oder niedere aliphatische Alkohole mit 1 bis 6 C-Atomen Verwendung finden. Das Dispergieren kann durch mechanische Bewegung einer dünnflüssigen Suspension in Plastikbehältern unter Verwendung eines Rührers oder durch Kneten einer dickflüssigen Suspension in einer Knetvorrichtung vorgenommen werden. Dann wird das Lösungsmittel entfernt, beispielsweise bei einer dünnflüssigen Suspension durch Sprühtrocknung oder bei einer dickflüssigen Suspension durch Abdunsten während des Knetvorganges, wobei zur Zerstörung von Agglomeraten und Sicherstellung einer homogenen Verteilung des Aluminat enthaltenden Zusatzes in der Regel eine Trockenmahlung in einer Strahl-, Stift- oder Kugelmühle nachgeschaltet wird.

Diese Ausgangspulvergemische werden durch Formgebung unter Bildung von vorgeformten Grünkörpern kompaktiert. Die Formgebung kann mittels üblicher bekannter Maßnahmen, beispielsweise durch Gesenkpressen, isostatisches Pressen oder Schlickergießen vorgenommen werden. Beim Gesenkpressen in Matrizen bzw. beim isostatischen Pressen wird üblicherweise ein Druck zwischen 30 bis 200 MPa, vorzugsweise 50 bis 100 MPa angewendet.

Anschließend werden diese vorgeformten Grünkörper definitionsgemäß drucklos gesintert. Die Sinterung erfolgt bei Temperaturen im Bereich von 1600° bis 1950° C, vorzugsweise im Bereich von 1650° bis 1900° C unter einem Stickstoffdruck von 0,5 bis 5 MPa, vorzugsweise 1 bis 3 MPa oder bei Normaldruck, bzw. Unterdruck bis 0,01 MPa in Stickstoff, Wasserstoff oder Edelgasen, wie Argon in einer Aluminiumnitridpulverschüttung. Nach beendeter Sinterung können die Aluminiumnitridsinterkörper, wenn sie eine Dichte von mindestens 95 % TD haben, durch Heißisostatpressen bei Temperaturen von etwa 1500° bis 1800° C unter einem Gasdruck mit einem Inertgas als Druckübertragungsmedium von vorzugsweise 150 bis 250 MPa nachverdichtet werden, wobei Sinterdichten von praktisch 100 % TD erreicht werden können.

Beispiel 1

Eingesetzt wurde ein AlN-Submikronpulver mit folgender chemischer Analyse (Gew.-%):

| Al | 64,4 |
|------|--------|
| $N_2$ | 33,4 |
| $O_2$ | 1,9 |
| Fe | 0,05 |
| Ti | < 0,05 |
| C | 0,15 |
| Rest | < 0,1 |

Mittlere Teilchengröße ca. 0,5 $\mu$ m.

Das AlN-Pulver wurde mit 0,3 Gew.-% Lanthanaluminat der Summenformel $La_2O_3$ x $Al_2O_3$ versetzt und

mit einem schnellaufenden Rührwerk in Aceton gemischt, anschließend im Rotationsverdampfer getrocknet und bei 200 MPa kaltisostatisch zu Zylindern von 25 mm d und 30 mm Höhe verpreßt. Die Sinterung erfolgte in einem Drucksinterofen bei einer Temperatur von $1860°$ C unter einem $N_2$-Druck von 2,0 MPa. Die Haltezeit bei Endtemperatur betrug 1 Stunde. Erreicht wurde eine Sin terdichte von $3,24 g/cm^2 = 99,4$ % der theoretischen Dichte von AlN.

Warmeleitfähigkeit bei Raumtemperatur = 105 W/mK.

Die Biegebruchfestigkeit (gemessen nach dem 4-Punkt-Verfahren) betrug bei

Raumtemperatur = 290 $N/mm^2$ und bei

$1300°$ C = 251 $N/mm^2$.

Der spezifische elektrische Widerstand bei Raumtemperatur wurde mit $>10^{15}$ Ohm . cm bestimmt.

Als oxidische Phasen lagen nach dem Röntgenbeugungsverfahren nur Lanthanaluminate vor.

Hauptphase: $La_2O_3$ . 11 $Al_2O_3$.

Durch eine heißisostatische Nachverdichtung bei 100 Mpa $N_2$-Gasdruck, $1600°$ C Endtemperatur und 30 Minuten Haltezeit konnte die Dichte auf 3,26 $g/cm^3$ (= 100 % TD) gesteigert werden. Die Wärmeleitfähigkeit erhöhte sich auf 121 W/mK bei Raumtemperatur. Es trat keine Änderung der oxidischen Phase auf.

Die Bestimmung der Wärmeleitfähigkeit wurde nach der Vergleichsmethode stationär bis $927°$ C unter Verwendung von Armco-Eisen als Referenzmaterial vorgenommen.

Beispiel 2

Eingesetzt wurde ein AlN-Submicronpulver mit folgender chemischer Analyse (in Gew.-%):

| | |
|------|--------|
| Al | 65,5 |
| $N_2$ | 34,0 |
| $O_2$ | 0,4 |
| Fe | < 0,01 |
| Ti | < 0,01 |
| C | 0,10 |
| Rest | < 0,01 |

Mittlere Teilchengröße ca. 0,6 $\mu$ m.

Als Sinterhilfsmittel wurden 0,7 Gew.-% Lanthanaluminat der Summenformel $La_2O_3$ . $Al_2O_3$ zugegeben. Das Mischen, Kalt-und Heißverdichten erfolgte wie unter den gleichen Bedingungen wie in Beispiel 1 beschrieben.

Erreicht wurde eine Sinterdichte von 3,21 $g/cm^3$ = 98,5 % der theoretischen Dichte von AlN.

Wärmeleitfähigkeit bei Raumtemperatur = 136 W/mK

Biegebruchfestigkeit (4-Punkt)

bei Raumtemperatur = 265 $N/mm^2$

und bei $1300°$ C = 253 $N/mm^2$

Spezifischer elektrischer Widerstand bei Raumtemperatur > $10^{15}$ Ohm . cm

Oxidische Phasen.

Hauptphase $La_2O_3$ . 11 $Al_2O_3$

Durch die heißisostatische Nachverdichtung bei 100 MPa $N_2$-Gasdruck, $1650°$ C Endtemperatur und 30 Minuten haltezeit konnte die Dichte auf 3,26 $g/cm^3$ (100 % TD) gesteigert werden. Die Wärmeleitfähigkeit bei Raumtemperatur wurde 157 W/mK erhöht. Es trat keine Änderung der oxidischen Phasen auf.

Beispiel 3

Beispiel 1 wurde wiederholt mit der Abänderung, daß 0,3 Gew.-% 2 $Gd_2O_3$ . $Al_2O_3$ statt $La_2O_3$. $Al_2O_3$ verwendet wurden. Mischung, Kalt- und Heißverdichtung erfolgte unter den gleichen Bedingungen wie in Beispiel 1 beschrieben; die Sintertemperatur betrug jedoch $1680°$

Sinterdichte: 3,22 $g/cm^3$ = 98,8 % TD

Wärmeleitfähigkeit bei Raumtemperatur = 114 W/mK

Biegebruchfestigkeit (4-Punkt)

bei Raumtemperatur = 286 $N/mm^2$

und bei 1300 °C = 238 N/mm²
Spezifischer elektrischer Widerstand bei Raumtemperatur > $10^{15}$ Ohm . cm.
Oxidische Phasen:
Hauptphase: $Gd_2O_3$ . $Al_2O_3$

Nach heißisostatischer Nachverdichtung wie in Beispiel 1 beschrieben:
Dichte = 3,26 g/cm³ = 100 % TD
Wärmeleitfähigkeit bei Raumtemperatur = 131 W/mK

Beispiel 4

Beispiel 2 wurde wiederholt mit der Abänderung, daß 0,7 Gew.-% 2 $Gd_2O_3$ . $Al_2O_3$ statt $La_2O_3$ . $Al_2O_3$ verwendet wurden. Mischung, Kalt- und Heißverdichtung erfolgen unter gleichen Bedingungen wie in Beispiel 1 beschrieben; die Sintertemperatur betrug jedoch 1700 °C.
Sinterdichte: = 3,21 g/cm³ = 98,5 % TD
Wärmeleitfähigkeit bei Raumtemperatur = 137 W/mK
Biegebruchfestigkeit (4-Punkt)
bei Raumtemperatur = 263 N/mm²
und bei 1300 °C = 244 N/mm²
Spezifischer elektrischer Widerstand bei Raumtemperatur > $10^{15}$ Ohm . cm
Oxidische Phasen:
Hauptphase: $Gd_2O_3$ . $Al_2O_3$

Nach heißisostatischer Nachverdichtung wie in Beispiel 1 beschrieben:
Dichte = 3,26 g/cm³ = 100 % TD
Wärmeleitfähigkeit bei Raumtemperatur = 162 W/mK.

## Ansprüche

1. Polykristalline Sinterkörper auf Basis von Aluminiumnitrid mit einer Dichte von mindestens 95 % der theoretisch möglichen Dichte, bestehend aus mindestens 90 Gew.-% einer kristallinen Hauptphase aus AlN und mindestens einer kristallinen Korngrenzenphase aus gebundenen Sauerstoff enthaltenden Aluminiumverbindungen, dadurch gekennzeichnet, daß die Korngrenzenphasen ausschließlich aus mindestens einer kristallinen Aluminatphase bestehen, in welcher die das Aluminat bildenden Elemente einzeln oder im Gemisch aus der Gruppe der dreiwertigen Kationen von Lanthan und den Lanthaniden ausgewählt sind und mindestens eine dieser kristallinen Aluminatphasen zusätzlich im wesentlichen den gesamten Sauerstoff aus dem Aluminiumnitrid-Ausgangsmaterial gebunden enthält.

2. Polykristalline Sinterkörper auf Basis von Aluminiumnitrid gemäß Anspruch 1, dadurch gekennzeichnet, daß die Korngrenzenphasen aus einer kristallinen Aluminatphase, ausgedrückt durch die allgemeine Formel

$mMe_2O_3$ x $nAl_2O_3$

in der Me = La oder Lanthaniden, m = mindestens 1 und n = m oder eine Zahl von größer als m und gegebenenfalls aus anderen kristallinen Aluminatphasen bestehen, in welchen gemäß der angegebenen allgemeinen Formel Me die angegebene Bedeutung hat, m = mindestens 1 und n = eine Zahl von < m.

3. Verfahren zur Herstellung der polykristallinen Sinterkörper auf Basis von Aluminiumnitrid gemäß Anspruch 1 und 2 durch drucklose Sinterung von Pulvergemischen aus AlN und Sinteradditiven auf Oxidbasis bei Temperaturen von bis zu 1900 °C, und gegebenenfalls heißisostatische Nachverdichtung dadurch gekennzeichnet, daß als Sinteradditive kristalline Aluminatpulver aus Verbindungen der allgemeinen Formel

$mMe_2O_3$ x $nAl_2O_3$

worin Me = La oder Lanthaniden, m = 2 oder 1 und n = 1, verwendet werden, die vor dem Vermischen mit den übrigen Bestandteilen und vor der Sinterung aus Lanthanoxid oder einem Oxid der Lanthaniden mit Aluminiumoxid im Molverhältnis 2:1 bis 1:1 durch Erhitzen auf Temperaturen von 1700° bis 1900° C hergestellt worden sind.

4. Verfahren nach Anspruch 3, dadurch gekennzeichnet, daß als Ausgangsmaterial homogene Pulvergemische aus 95,00 bis 99,99 Gew.-% Aluminiumnitrid mit einer mittleren Teilchengröße von < 2 μ m, einem Sauerstoffgehalt von höchstens 2 Gew.-% und einem Gehalt an metallischen Verunreinigungen (Fe, Si, Ca, Mg) + C von höchstens 0,5 Gew.-% und aus 0,01 bis 5,00 Gew.-% Aluminat aus Verbindungen der allgemeinen Formel

$$mMe_2O_3 \times nAl_2O_3$$

in der Me = La oder Lanthaniden, m = 2 oder 1 und n = 1 mit einer Teilchengröße von < 1 μ m und einem Gehalt an metallischen Verunreinigungen (Fe, Si, Ca, Mg) + C von höchstens 1 Gew.-% verwendet werden, die unter Bildung von Grünkörpern kompaktiert und anschließend bei Temperaturen im Bereich von 1600° bis 1950° C drucklos gesintert werden und gegebenenfalls bei Temperaturen im Bereich von 1500° C bis 1800° C unter einem Gasdruck von 150 bis 250 MPa mit einem Inertgas als Druckübertragungsmedium heißisostatisch nachverdichtet werden.

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,A | DE-A-3 723 774  (TOKUYAMA SODA·KK)<br>* Ansprüche 1,11 *<br>--- | 1 | C 04 B  35/58 |
| D,A | DE-A-3 627 317  (TOKUYAMA SODA KK)<br>* Anspruch 1; Seite 3, Zeilen 59-66 *<br>--- | 1 | |
| D,A | EP-A-0 180 724  (KABUSHIKI KAISHA TOSHIBA)<br>* Ansprüche 1,2,5; Seite 8, Zeilen 24-27 *<br>--- | 1 | |
| D,A | EP-A-0 147 101  (KABUSHIKI KAISHA TOSHIBA)<br>* Anspruch 1; Seite 2, Zeile 33 - Seite 3, Zeile 7 *<br>----- | 1 | |

RECHERCHIERTE
SACHGEBIETE (Int. Cl.4)

C 04 B  35/58

Der vorliegende Recherchenbericht wurde für alle Patentansprüche erstellt

| Recherchenort | Abschlußdatum der Recherche | Prüfer |
|---|---|---|
| BERLIN | 23-02-1989 | STROUD J.G. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)